# EUROPÄISCHE PATENTANMELDUNG

(11) **EP 4 678 353 A2**
(43) Veröffentlichungstag der Anmeldung: **14.01.2026**
(21) Anmeldenummer: 25186556.4
(22) Anmeldetag: 01.07.2025
(51) Int. Cl.: B25J 15/00, B25J 17/02, B23P 19/12, B23P 19/06

(54) **AUTOMATISCHES SCHRAUBSYSTEM ZUM VERBINDEN VON BAUTEILEN**

(30) Priorität: 09.07.2024 DE 102024119447
(71) Anmelder: Stöger Automation GmbH, 82549 Königsdorf (DE)
(72) Erfinder: Lorenz, Stöger, 82459 Königsdorf (DE)
(74) Vertreter: Flosdorff, Jürgen

(57) **Zusammenfassung**

Das Schraubsystem zum Verbinden von Bauteilen, für deren Schraubverbindung hohe Anpresskräfte erforderlich sind, wobei das Schraubsystem eine mit einem Gelenkarmroboter verbundene Schraubeinheit aufweist, die einen Motor für den Drehantrieb, eine Drehmomentwelle, eine Werkzeugaufnahme für ein Schraubwerkzeug und einen Zuführkopf enthält, die auf einer gemeinsamen Schraubachse liegen, ist dadurch gekennzeichnet, dass die Schraubeinheit um ein kugelartiges Gelenk schwenkbar gelagert ist, das in der Schraubachse angeordnet ist, so dass eine Auslenkung einer Roboterachse des Gelenkarmroboters infolge von Anpresskräften und eine an sich daraus resultierende Schräglage der Schraubeinheit durch deren Verschwenken ausgeglichen wird, so dass die Schraubachse ihre senkrechte Lage zur Ebene der zu verbindenden Bauteile beibehält.

## Beschreibung

Die Erfindung betrifft ein automatisches Schraubsystem zum Verbinden von Bauteilen, für deren Schraubverbindung hohe Anpresskräfte erforderlich sind. Bei einem System der betrachteten Art ist eine Schraubeinheit an einem Gelenkarmroboter montiert. Die Schraubeinheit enthält einen Motor für den Drehantrieb, bevorzugt einen Aktuator für den Linearantrieb, ein Getriebe, eine Drehmomentwelle, eine Werkzeugaufnahme für ein Schraubwerkzeug und einen Zuführkopf, dem automatisch Schrauben, vorzugsweise fließlochformende Schrauben zugeführt werden, die während des Schraubvorgangs in Zentrierbacken des Zuführkopfs gehalten werden. Die Linearbewegung der Schraubeinheit kann auch von dem Roboter hervorgerufen werden. Wenn es sich um selbstschneidende Schrauben handelt, für die kein Bohrloch vorhanden ist, sind die Anpresskräfte des Schraubwerkzeugs hoch, sie betragen beispielsweise ca. 3.000 N. Die Drehmomentwelle, die Werkzeugaufnahme, das Schraubwerkzeug sowie der Zuführkopf liegen auf einer gemeinsamen Schraubachse.

Bei den automatischen Schraubsystemen dieser Art nimmt der Gelenkarmroboter infolge der großen Anpresskräfte, die von dem Schraubwerkzeug auf die Schrauben ausgeübt werden, hohe Kräfte auf, die zu einer Auslenkung der Roboterachsen führen können, mit der Folge einer Auslenkung und leichten Schiefstellung der Schraubeinheit. Diese Auslenkung bewirkt bei den bisher bekannten Schraubsystemen dieser Art einen Versatz des Zuführkopfs der Schraubeinheit, in dem die zu verarbeitende Schraube gehalten wird. Dabei entstehen hohe Querkräfte und Biegebelastungen, die dazu führen können, dass die Schraube leicht schräg eingedreht wird. Beim Endanzug der Schraube kann es passieren, dass der Schraubenkopf nicht plan am Bauteil aufliegt und somit ein kleiner Spalt entsteht. Außerdem kann der Drehmomentwert der Verschraubung verfälscht werden, und der Schrauber kann einem erhöhten Verschleiß unterliegen.

Der vorliegenden Erfindung liegt die Aufgabe zugrunde, derartige Nachteile der bisher bekannten automatischen Schraubsysteme zu vermeiden und ein verbessertes System anzugeben, bei dem sichergestellt ist, dass auch bei einer Schrägstellung des Gelenkarmroboters zur Ebene des Werkstücks, in die die Schrauben eingeschraubt werden, und bei Auftreten von hohen Anpresskräften beim Schraubvorgang die Schrauben ohne eine Schrägstellung eingeschraubt werden und ohne dass ein Spalt zwischen der Schraube und dem Werkstück am Ende des Schraubvorgangs entsteht.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Schraubeinheit um ein kugelartiges, sphärisches Gelenk schwenkbar gelagert ist, das in der Schraubachse angeordnet ist, so dass eine Auslenkung einer Roboterachse des Gelenkarmroboters infolge von Anpresskräften und eine an sich daraus resultierende Schräglage der Schraubeinheit in der X-, Y- oder Z-Richtung durch deren Verschwenken ausgleichbar ist, so dass die Schraubachse ihre senkrechte Lage zur Ebene der zu verbindenden Werkstücke beibehält. Durch diese gelenkige Lagerung der Schraubeinheit liegt der Zuführkopf während des gesamten Schraubvorgangs plan auf dem Werkstück, z.B. einem Blech, auf, während die Schraubeinheit so um das in der Schraubachse liegende kugelartige Gelenk verschwenkt wird, dass die Schraubachse ihre senkrechte Lage zur Ebene der zu verbindenden Werkstücke beibehält. Dies gilt für eine beliebige Schrägstellung des Gelenkarmroboters. Dabei kann die Ebene der zu verbindenden Bauteile horizontal oder auch im Winkel zur Horizontalen angeordnet sein.

Die Erfindung sieht außerdem vor, dass die Schraubeinheit schwenkbar in einer mit dem Gelenkarmroboter verbundenen Halterung angeordnet ist, die einen Lagerkugelkranz aufweist, und dass die Schraubeinheit einen Kugelabschnitt enthält, der an dem Lagerkugelkranz anliegt. Die Lagerkugeln des Lagerkugelkranzes sind dabei in einer Ringform bevorzugt in einem Käfig gehalten.

Außerdem wird mit Vorteil vorgeschlagen, dass die Halterung außerdem federbeaufschlagte Lagerkugeln in einem axialem Abstand von dem Lagerkugelkranz aufweist, die jeweils in einem Kugelnest in der Halterung angeordnet sind und durch eine Feder um eine kleine Strecke von beispielsweise ein bis drei Millimeter aus dem Kugelnest vorstehen, und dabei in Ausnehmungen der Schraubeinheit eingreifen und aus den Ausnehmungen austreten können, wie weiter unten näher erklärt ist. Es können dabei zum Beispiel drei einzelne Lagerkugeln vorgesehen sein, die im Abstand von 120 Grad voneinander angeordnet sind. Im unbelasteten Ausgangszustand des Schraubsystems greifen die Lagerkugeln demnach in die Ausnehmungen der Schraubeinheit ein, so dass die Lage der Schraubeinheit blockiert ist. Bei Auftreten von hohen Anpresskräften beim Schraubvorgang geben die Lagerkugeln die Schraubeinheit frei.

In näheren Einzelheiten wird vorgeschlagen, dass die Schraubeinheit mit einer Hülse versehen ist, auf der der Kugelabschnitt axial verschieblich sitzt, und dass zwischen der Hülse und dem sie umgebenden Kugelabschnitt Druckfedern angeordnet sind, die in Ausnehmungen der Hülse gehalten sind und in zugewandten Einbuchtungen des Kugelabschnitts eingreifen. Dabei können drei bis sechs Druckfedern gleichmäßig über den Umfang verteilt angeordnet sein.

Die Druckfedern drücken die Hülse mit den Ausnehmungen gegen die überstehenden Lagerkugeln und den Kugelabschnitt gegen den Lagerkugelkranz. Im unbelasteten Zustand der Schraubeinheit (vor Beginn eines Schraubvorgangs) ist die Schraubeinheit gegen ein Verschwenken um das kugelartige Gelenk blockiert.

Bei Einwirkung von hohen Anpresskräften beim Schraubvorgang führt die Schraubeinheit hingegen gegen die Kraft der Druckfedern einen solchen Hub aus, dass die Lagerkugeln aus den Ausnehmungen austreten, so dass die Schraubeinheit verschwenkbar ist. Damit behält die Schraubeinheit ihre vertikale Lage zu dem Werkstück auch dann bei, wenn die hohen Anpresskräfte beim Schraubvorgang zu einer Auslenkung von Roboterachsen führen.

Mit Vorteil wird außerdem vorgeschlagen, dass der Kugelabschnitt der Schraubeinheit und die Ausnehmung für die Lagerkugeln auf einer imaginären Kugel angeordnet sind und dass die Schraubeinheit um den Mittelpunkt dieser imaginären Kugel schwenkbar bzw. drehbar ist.

Der Mittelpunkt der Kugel kann zudem der Schwerpunkt der Schraubeinheit sein.

Optional kann das Schraubsystem einen Feststellzylinder enthalten, dessen Kolben in der ausgefahrenen Position in eine Bohrung der Hülse der Schraubeinheit eingreift, um die Ausgangsstellung der Schraubeinheit zusätzlich zu blockieren.

Der Fügevorgang, bei dem das Werkstück, in das eine Schraube eingebracht werden soll, fest eingespannt sein kann, läuft folgendermaßen ab:
1. Die Schraubeinheit setzt mit dem Zuführkopf auf dem Werkstück auf,
2. Das Schraubwerkzeug fährt auf die Schraube, die sich im Zuführkopf befindet, auf und wird anschließend mit hoher Axialkraft beaufschlagt,
3. Durch die hohe Prozesskraft wird die Roboterachse um einen Winkel ausgelenkt,
4. Die Auslenkung der Roboterachse wird durch das kugelartige Gelenk in der Schraubachse ausgeglichen,
5. Der Schraubvorgang wird ausgeführt, wobei auf die Schraube und das Bauteil keine Querkräfte einwirken.

### Hierdurch werden

a) Beschädigungen durch "Schieben" des Zuführkopfs auf dem Werkstück vermieden,
b) Das Drehmoment während der Verschraubung nicht verfälscht, wodurch die Prozess-Sicherheit erhöht wird,
c) Die Schraube und das Schraubwerkzeug weniger belastet, wodurch die Standzeit erhöht wird,
d) Die Schraube gerade eingedreht, wodurch die Dichtigkeit der Schraubverbindung verbessert ist.

6. Nachdem die Schraube eingedreht ist, wird die Axialkraft des Schraubwerkzeugs zurückgenommen und der Roboter geht in seine Ausgangsposition.

Weitere Merkmale und Einzelheiten der Erfindung ergeben sich aus der nachfolgenden Beschreibung einer bevorzugten Ausführungsform des Schraubsystems sowie anhand der Zeichnungen.

Dabei zeigen:
- Figur 1: eine schematische Gesamtansicht des automatischen Schraubsystems;
- Figur 2: die Schraubeinheit in der Grundstellung;
- Figur 3: die Schraubeinheit der Figur 2 beim Schraubprozess ohne Winkelausgleich;
- Figur 4: die Schraubeinheit mit Winkelausgleich
- Figur 5: eine Schnittansicht des kugelartigen Gelenks der Schraubeinheit
- Figur 6: die Schraubeinheit im sphärisch ausgelenkten Zustand.

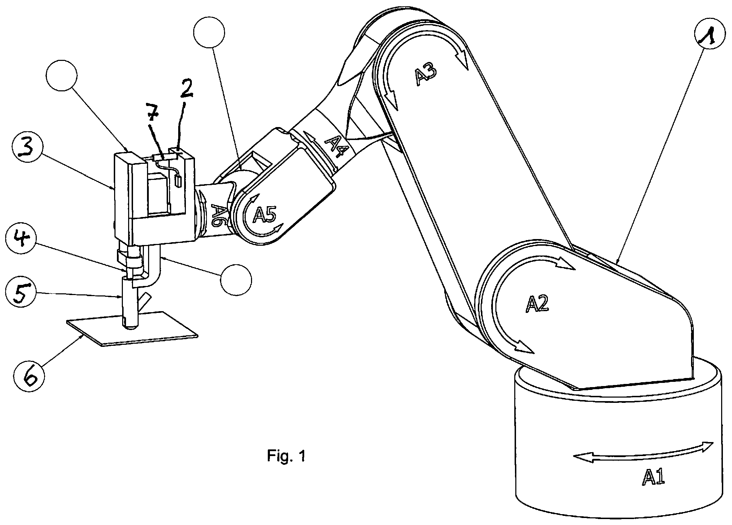

Figur 1 zeigt eine Ausführungsform des Schraubsystems zur Verbindung von Bauteilen. Das Schraubsystem enthält einen Gelenkarmroboter 1, dessen Arme A1 bis A5 in die Richtung der dargestellten Pfeile drehbar sind. An der vorderen Roboterachse ist ein Adapter 2 angebracht, an dem eine Schraubeinheit 3 befestigt ist. Die Schraubeinheit 3 enthält einen Motor für den Drehantrieb, eine Drehmomentwelle, ein Schraubwerkzeug 4 und einen Zuführkopf 5, dem automatisch Schrauben, vorzugsweise fließlochformende Schrauben zugeführt werden, die während des Schraubvorgang in Zentrierbacken des Zuführkopfs 5 gehalten sind. Die Drehmomentwelle, das Schraubwerkzeug 4 und der Zuführkopf 5 liegen auf einer gemeinsamen Schraubachse, die senkrecht zur Ebene des Werkstücks 6 verläuft. Die Schrauben werden während des Schraubvorgangs in den Zentrierbacken des Zuführkopfs 5 so gehalten, dass ihre Längsachse mit der Mittellängsachse des Zuführkopfs 5 übereinstimmt.

Am oberen Endbereich des Adapters 2 kann ein Rückstellzylinder 7 befestigt sein, dessen Kolbenstange mit der gegenüberliegenden Schraubeinheit 3 verbunden ist. Mit diesem Rückstellzylinder 7 kann die nicht-ausgelenkte Ausgangsstellung nach Beendigung eines Schraubvorgangs festgestellt werden.

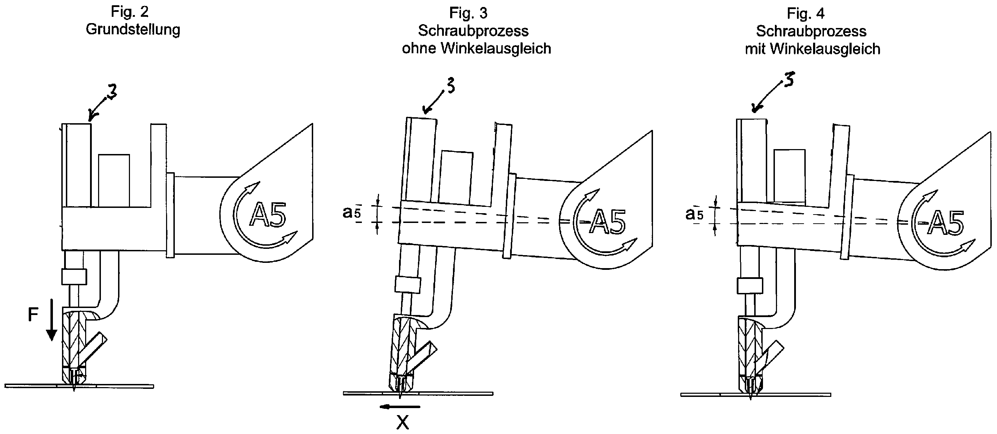

Figur 2 zeigt die an dem Gelenkarmroboter befestigte Schraubeinheit 3 in der Grundstellung, wobei der Zuführkopf 5 mit den Zentrierbacken geschnitten dargestellt ist. Das Schraubwerkzeug 4 steht mit einer Schraube in Eingriff, die in den Zentrierbacken in vertikaler Lage gehalten ist. Beim Schraubvorgang wird eine beträchtliche Anpresskraft F auf die Schraube ausgeübt.

Figur 3 zeigt, dass durch diese Anpresskraft die Schraubeinheit 3 um einen Winkel α 5 in Richtung des Pfeils verschwenkt wird, wodurch an der Fügestelle eine Kraft X hervorgerufen wird, die ohne Mittel zum Winkelausgleich zu einer leichten Schrägstellung der Schraube beim Eindrehen führen würde.

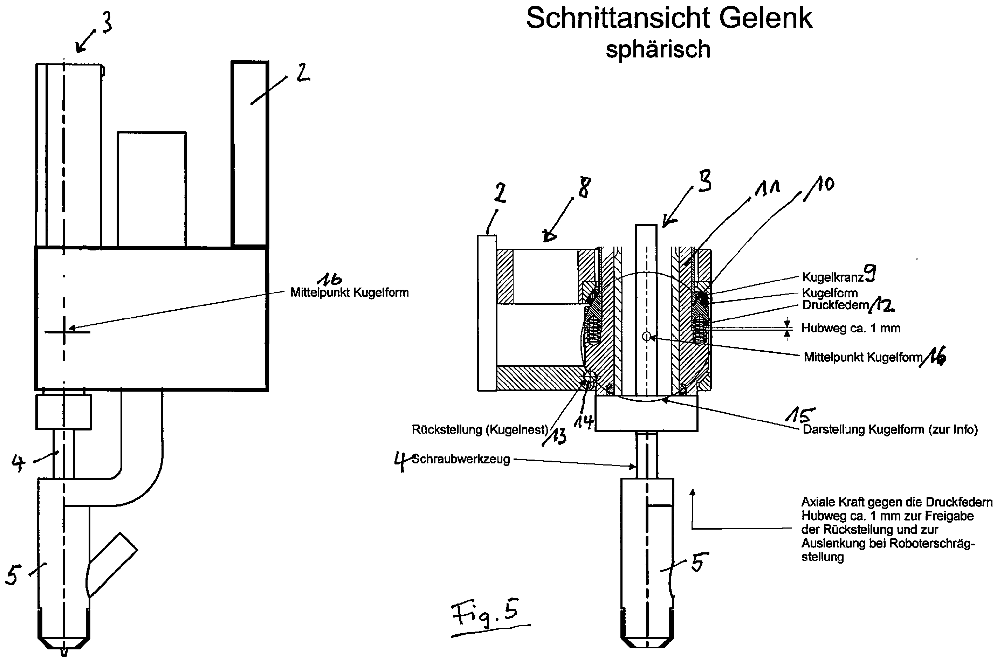

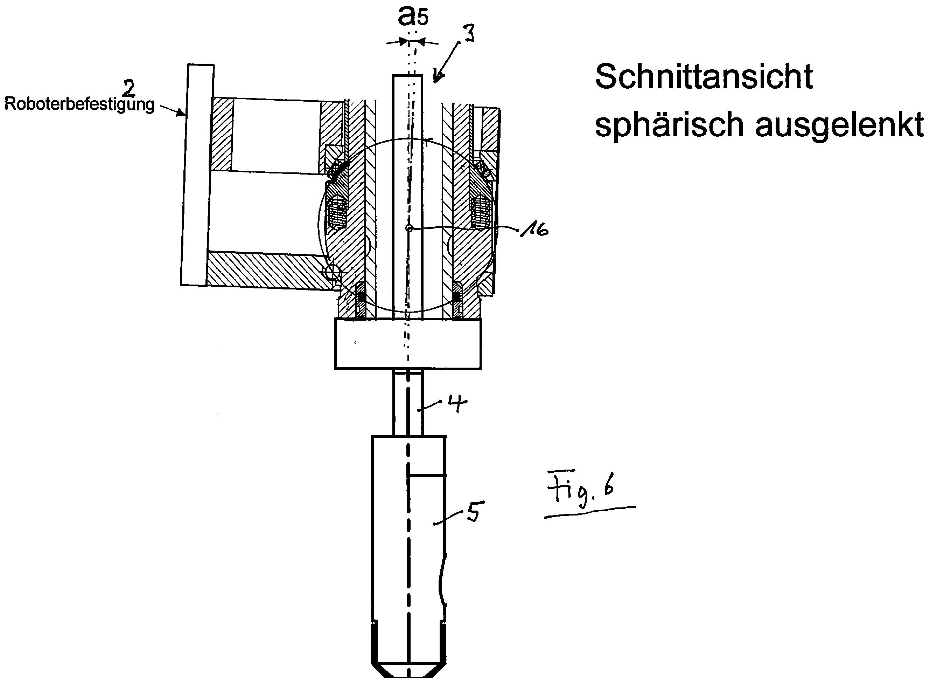

Um einen derart fehlerhaften Schraubvorgang zu vermeiden, ist die Schraubeinheit 3 mit der am Gelenkarmroboter befestigen Halterung durch ein kugelartiges Gelenk verbunden, das in der Schraubachse der Schraubeinheit 3 angeordnet ist. Die Schraubeinheit 3, deren Zentrierbacken in den Zuführkopf 5 fest gegen das Werkstück 6 gedrückt sind und deren Schraube mit hoher Axialkraft beaufschlagt ist, wird so um das in den Figuren 5 und 6 dargestellte Gelenk verschwenkt, dass die Schraubachse ihre senkrechte Lage zur Ebene des Werkstücks 6 beibehält. Dieser Winkelausgleich ist in Figur 4 schematisch dargestellt.

Figur 5 zeig eine Schnittansicht durch die Schraubeinheit 3, die schwenkbar in einer insgesamt mit 8 bezeichneten Halterung ist, die mit dem Adapter 2 an dem Gelenkarmroboter 1 befestigt ist. Die Halterung 8 enthält einen Lagerkugelkranz 9, dessen ringförmig angeordnete Lagerkugeln in einem an der Halterung 8 befestigen Käfig angeordnet sind. Die Schraubeinheit 3, die schwenkbar in der Halterung 8 gelagert ist, enthält einen Kugelabschnitt 10, der an dem Lagerkugelkranz 9 anliegt. Das Kugelabschnittelement 10 sitzt axial verschieblich auf einer Hülse 11 der Schraubeinheit 3. Zwischen einem radial äußeren Absatz der Hülse 11 und der zugewandten Stirnseite des Kugelabschnittelements 10 sind gleichmäßig über den Umfang verteilte Druckfedern 12 angeordnet. Im unteren Endbereich der Hülse 11 sind Ausnehmungen ausgebildet, in die federbeaufschlagte Lagerkugeln 13 eingreifen, die in der Halterung 8 angeordnet sind und im unbelasteten Zustand der Schraubeinheit 3 in die hierzu vorgesehenen Einbuchtungen eingreifen, wodurch die nicht-ausgelenkte Lage der Schraubeinheit 3 lösbar fixiert ist.

Die Druckfedern 12 drücken das Kugelabschnittelement 10 gegen den Lagerkugelkranz 9 und die Hülse 11 gegen die über die Halterung 8 überstehenden Lagerkugeln 13.

Das Kugelkranzelement 9 und die Kugelnester 14 mit den Lagerkugeln 13 sind auf einer imaginären Kugel angeordnet, die in der Darstellung der Figur 5 mit dem Kreis 15 angedeutet ist.

Wenn beim Schraubvorgang große Kräfte auf die Schraubeinheit 3 einwirken, die in Figur 3 angedeutet sind, wird die Schraubeinheit 3 gegen die Kraft der Druckfedern 12 um eine Hubstrecke angehoben, die so groß ist, dass die Lagerkugeln 13 außer Eingriff mit der Hülse 11 geraten, wodurch die Schraubeinheit frei um den Mittelpunkt 16 der imaginären Kugel 15 drehbar bzw. schwenkbar ist. Der Hub der Schraubeinheit 3 beträgt dabei 1 bis 3 mm, vorzugsweise 1 mm. Die Grundstellung wird wieder über die 3 Kugelnester gegen die Federkraft 12, 13, 14 erreicht.

Figur 6 zeigt einen ausgelenkten Zustand der Schraubeinheit 3, die um einen Winkel α 5 sphärisch ausgelenkt ist.

## Patentansprüche

1. Schraubsystem zum Verbinden von Bauteilen (6), für deren Schraubverbindung hohe Anpresskräfte erforderlich sind, wobei das Schraubsystem eine mit einem Gelenkarmroboter (1) verbundene Schraubeinheit (3) aufweist, die einen Motor für den Drehantrieb, eine Drehmomentwelle, eine Werkzeugaufnahme für ein Schraubwerkzeug (4) und einen Zuführkopf (5) enthält, die auf einer gemeinsamen Schraubachse liegen,
**dadurch gekennzeichnet,**
**dass** die Schraubeinheit (3) um ein kugelartiges Gelenk schwenkbar gelagert ist, das in der Schraubachse angeordnet ist, so dass eine Auslenkung einer Roboterachse des Gelenkarmroboters (1) infolge von Anpresskräften und eine an sich daraus resultierende Schräglage der Schraubeinheit (3) durch deren Verschwenken ausgeglichen wird, so dass die Schraubachse ihre senkrechte Lage zur Ebene der zu verbindenden Bauteile (6) beibehält.

2. Schraubsystem nach Anspruch 1,
**dadurch gekennzeichnet,**
**dass** die Schraubeinheit (3) schwenkbar in einer mit dem Gelenkarmroboter (1) verbundenen Halterung (8) angeordnet ist, die einen Lagerkugelkranz (9) aufweist, und dass die Schraubeinheit (3) ein Kugelabschnittelement (10) aufweist, das an dem Lagerkugelkranz (9) anliegt.

3. Schraubsystem nach Anspruch 1 oder 2
**dadurch gekennzeichnet,**
**dass** die Halterung (8) außerdem einzelne federbeaufschlagte Lagerkugeln (13) im axialen Abstand von dem Lagerkugelkranz (9) aufweist, die in Ausnehmungen (14) der Schraubeinheit (3) eingreifen und aus den Ausnehmungen (14) austreten können.

4. Schraubsystem nach einem der Ansprüche 1 bis 3
**dadurch gekennzeichnet,**
**dass** die Schraubeinheit (3) mit einer Hülse (11) versehen ist, auf der das Kugelabschnittelement (9) axial verschieblich sitzt, und dass zwischen der Hülse (11) und dem sie umgebenden Kugelabschnittelement (9) Druckfedern (12) angeordnet sind.

5. Schraubsystem nach einem der Ansprüche 1 bis 4,
**dadurch gekennzeichnet,**
**dass** die Ausnehmungen (14) in der Hülse (11) ausgebildet sind und dass die Druckfedern (12) die Hülse (11) mit den Ausnehmungen (14) gegen die Lagerkugeln (13) und das Kugelabschnittelement (10) gegen den Lagerkugelkranz (9) drücken.

6. Schraubsystem nach einem der Ansprüche 1 bis 5,
**dadurch gekennzeichnet,**
**dass** die Schraubeinheit (3) bei Einwirken von hohen Anpresskräften gegen die Kraft der Druckfedern (12) einen solchen Hub ausführt, dass die Lagerkugeln (13) aus den Ausnehmungen (14) austreten, sodass die Schraubeinheit (3) verschwenkbar ist.

7. Schraubsystem nach einem der Ansprüche 1 bis 6,
**dadurch gekennzeichnet,**
**dass** das Kugelabschnittelement (10) und die Ausnehmungen (14) mit den Lagerkugeln (13) auf einer imaginären Kugel (15) angeordnet sind, und dass die Schraubeinheit (3) um den Mittelpunkt (16) der imaginären Kugel (15) schwenkbar ist.

8. Schraubsystem nach Anspruch 7,
**dadurch gekennzeichnet,**
**dass** der Mittelpunkt der imaginären Kugel (16) der Schwerpunkt der Schraubeinheit (3) ist.
